**Europäisches Patentamt**

**European Patent Office**

**Office européen des brevets**

(19)

(11) Veröffentlichungsnummer: **0 216 257 B1**

(12) **EUROPÄISCHE PATENTSCHRIFT**

(45) Veröffentlichungstag der Patentschrift: **23.10.91**

(21) Anmeldenummer: **86112549.0**

(22) Anmeldetag: **10.09.86**

(51) Int. Cl.⁵: **C09D 201/04**, C08L 27/18, C08L 27/16, D06M 15/256

Die Akte enthält technische Angaben, die nach dem Eingang der Anmeldung eingereicht wurden und die nicht in dieser Patentschrift enthalten sind.

(54) **Wässrige, pastöse Überzugszusammensetzung und ihre Verwendung.**

(30) Priorität: **21.09.85 DE 3533807**

(43) Veröffentlichungstag der Anmeldung:
**01.04.87 Patentblatt 87/14**

(45) Bekanntmachung des Hinweises auf die Patenterteilung:
**23.10.91 Patentblatt 91/43**

(84) Benannte Vertragsstaaten:
**AT BE CH DE FR GB IT LI NL SE**

(56) Entgegenhaltungen:
**EP-A- 0 050 436**
**EP-B- 0 057 813**

(73) Patentinhaber: **HOECHST AKTIENGESELL-SCHAFT**
**Postfach 80 03 20**
**W-6230 Frankfurt am Main 80(DE)**

(72) Erfinder: **Neumann, Wolfgang**
**Balthasar Neumann-Str. 35**
**W-8264 Waldkraiburg(DE)**
Erfinder: **Hendriock, Hans-Jürgen, Dr.**
**Piracherstr. 12a**
**W-8263 Burghausen(DE)**

**Beschreibung**

Die Erfindung betrifft eine wäßrige, pastöse Überzugszusammensetzung auf der Basis eines fluorhaltigen Copolymeren aus Tetrafluorethylen (TFE), Vinylidenfluorid (VDF) und Hexafluorpropen (HFP) sowie deren Verwendung.

Es ist seit langem bekannt, Glas- oder Textilgewebe mit Polymeren des Tetrafluorethylens in Form wäßriger, kolloidaler Dispersionen zu beschichten und zu imprägnieren. Dabei wurde schon frühzeitig bekannt, daß die Bildung von Schlammrissen ("mud cracks") einen großen Nachteil beim Aufbau solcher Beschichtungen darstellt. In der US-PS 2 539 329 wurde bereits darauf hingewiesen, daß beim Aufbringen von konzentrierten PTFE-Dispersionen in dicken Schichten die Rißbildungs-Tendenz mit zunehmender Dicke der in einem Beschichtungsvorgang aufgebrachten Schicht so stark zunimmt, daß dicke Schichten in befriedigender Qualität nur durch schrittweises Aufbringen einer größeren Anzahl dünner Schichten erhalten werden können. Diese Methode ist jedoch ebensowenig befriedigend wie das in der genannten US-Patentschrift vorgeschlagene Kalandrieren und Erhitzen der dicken Schicht zur Beseitigung der Risse. Auch für das Aufbringen von aus der Schmelze verarbeitbaren Copolymeren des TFE, wie zum Beispiel solche Copolymere von TFE und HFP, ist vorrangig empfohlen worden, mehrere dünne Schichten sukzessive aufzubringen (siehe beispielsweise GB-PS 841 917). Es ist auch bereits versucht worden, hydrophile filmbildende Verdickungs- und Filmbildungsmittel, wie zum Beispiel Alkalisalze von Polyacrylaten oder -methacrylaten, in PTFE-Dispersionen einzumischen und damit Glasfasergewebe zu beschichten, wie beispielsweise beschrieben in der FR-PS 1 139 928.

Aber auch auf diese Weise gelingt es nicht, dicke Schichten völlig ohne Risse zu erreichen. Vor allem müssen die mit solchen Mischungen erhaltenen Überzüge zwecks Sinterung des perfluorierten Polymeren auf Temperaturen über 350 °C erhitzt werden, was die Zersetzung und Verflüchtigung des filmbildenden Polymeren bewirkt und eine häufig unerwünschte Porosität solcher Überzüge zur Folge hat. Auch sind perfluorierte Polymere für die Beschichtung von textilen Geweben nur bedingt geeignet, denn entweder muß die Sinterung unter ganz besonderen Vorsichtsmaßnahmen erfolgen oder es müssen von vornherein Gewebe aus hochtemperaturbeständigen Fasern ausgewählt werden.

Es ist auch schon beschrieben worden, Polyvinylidenfluorid oder Copolymere, die überwiegend Vinylidenfluorid enthalten und welche daher bei niedrigeren Temperaturen eingebrannt werden können, mit "latenten" Lösungsmitteln und Acrylat- oder Methacrylat-Polymeren abzumischen und daraus Überzüge herzustellen (siehe US-Patentschriften 3 324 069 und 3 944 689). Dabei werden hohe Mengen an Acrylat- bzw. Methacrylat-Polymeren hinzugegeben, wobei durch diese "Verdünnung" die Schmutzabweisung und die Antihafteigenschaften des Überzugs aus Vinylidenfluorid-Polymeren zwangsläufig herabgesetzt werden. Auch bringt die Beschichtung mit einer Überzugsmasse, die ausschließlich oder überwiegend organische Lösungsmittel enthält, erhebliche Probleme bezüglich des Umgangs mit großen Mengen an Lösungsmitteln bei der Verarbeitung und deren Beseitigung oder Wiedergewinnung nach der Beschichtung mit sich.

Daher ist man bestrebt, auf wäßrige Dispersionen überzugehen. In der EP-PS 57 813 werden wäßrige Beschichtungszusammensetzungen angegeben, die Polyvinylidenfluorid und Acrylat-Copolymere enthalten, wobei letztere in einer Menge von 7 bis 50 Gew.-%, bezogen auf die Summe beider Polymerer, anwesend sind. Offensichtlich sind die eingesetzten Acrylat-Polymeren in bezug auf die Verdickungseigenschaften aber unzureichend, da bevorzugt noch ein zusätzliches Polyacrylat-Verdickungsmittel hinzugegeben werden soll, wodurch die Gesamtkonzentration der Acrylat-Polymeren, bezogen auf die Summe aller Polymerer einschließlich PVDF, aber auf mindestens 9 Gew.-% ansteigt.

Ferner sind aus der DE-PS 23 25 304 Überzugsmittel bekannt, die Gemische von PVDF und Polyacrylaten in wäßriger Einstellung darstellen, wobei das Polyacrylat allerdings einen noch höheren Anteil von 10 bis 75 Gew.-%, bezogen auf das Gesamtgewicht beider Polymerisate, ausmacht. Unter PVDF sollen hier auch Copolymerisate von VDF mit unter anderem TFE und/oder HFP verstanden werden, wobei VDF aber mindestens zu 75 Mol-% der einpolymerisierten Einheiten enthalten ist, das heißt, es handelt sich um Copolymere mit weitgehend elastomeren Eigenschaften.

Diese bekannten Überzugszusammensetzungen weisen also folgende Nachteile auf: PVDF neigt dazu, harte, zur Versprödung neigende Überzüge zu ergeben. Diese Neigung kann durch hohe Zusätze an Acrylat-Polymeren überbrückt werden, gegebenenfalls werden zusätzlich auch noch andere Weichmacher hinzugegeben. PVDF und Copolymere, die überwiegend VDF enthalten, können bei relativ niedrigen Temperaturen eingebrannt werden, sind jedoch aufgrund ihres höheren Wasserstoffanteils in der Kette in den für Fluorpolymere typischen Eigenschaften wie Chemikalienresistenz und Antihafteigenschaften den hochfluorierten Polymeren nicht voll ebenbürtig. Dieser Unterschied vergrößert sich dann zusehends, wenn Beschichtungen großer Mengen an nichtfluorierten Polymeren, wie zum Beispiel Polyacrylate, enthalten. Auf der anderen Seite sind hochfluorierte Polymere, wie PTFE, wegen ihrer hohen Einbrenntemperaturen für empfindliche Gewebe ungeeignet und weisen ungünstige Filmbildungseigenschaften auf, die die Aufbringung relativ dicker Schichten in einem Auftrag nicht gestatten.

In der EP-OS 50 436, Beispiel 9, wird einem Terpolymeren aus Tetrafluorethylen, Hexafluorpropen und Vinylidenfluorid ähnlicher Zusammensetzung ein Polyacrylsäure-Verdickungsmittel zugesetzt. Diese Überzugszusammensetzung wird als eine Heißsiegelschicht auf hochtemperaturbeständige Aramid-Folien aufgebracht. Für streichfähige Pasten zur Gewebebeschichtung ist dieses Verdickungsmittel nicht geeignet.

Es besteht also nach wie vor ein Bedürfnis nach einer wäßrigen Überzugszusammensetzung, vorzugsweise für Textilgewebe, auf der Basis möglichst hochfluorierter Polymerer, die auch für solche Gewebe geeignet sein soll, welche nur bis zu mäßig hohen Temperaturen beständig sind, wobei hochviskose, streichfähige Einstellungen erwünscht sind, die in relativ dicken Schichten in einem einzigen Auftrag ohne Rißbildung aufgebracht werden können.

Diesem Bedürfnis wird gemäß der vorliegenden Erfindung Rechnung getragen durch eine wäßrige, pastöse Überzugszusammensetzung der eingangs genannten Art, die dadurch gekennzeichnet ist, daß sie besteht aus

a) 30 bis 60 Gew.-Teilen eines Polymeren-Gemisches aus

a¹) 99,9 bis 98,5 Gew.-%, bezogen auf die Summe a¹) plus a²), eines Copolymeren aus 45 bis 65 Gew.-% an copolymerisierten Einheiten des TFE, 35 bis 20 Gew.-% an copolymerisierten Einheiten des VDF und 20 bis 10 Gew.-% an copolymerisierten Einheiten des HFP, sowie

a²) 0,1 bis 1,5 Gew.-%, bezogen auf die Summe a¹) plus a²), eines Verdickungsmittels aus einem im wesentlichen unvernetzten Copolymeren der Acrylsäure oder Methacrylsäure, das neben copolymerisierten Einheiten aus der Gruppe der Acryl- und Methacrylsäure oder deren Gemischen weiterhin noch copolymerisierte Einheiten mindestens eines Acryl- oder Methacrylsäureesters enthält, der 1 bis 10 C-Atome in der Alkoholkomponente des Esters aufweist, und das in einer 1 gew.-%igen wäßrigen ammoniakalischen Lösung bei einem pH-Wert von 9 unter einer Schergeschwindigkeit von 1000 s⁻¹ eine Viskosität von 5 bis 40 mPa s, gemessen mit einem Rotationsviskosimeter bei 20 °C, besitzt,

b) 30 bis 60 Gew.-Teilen Wasser, und

c) 1 bis 5 Gew.-Teilen eines anionischen oder nichtionischen Netzmittels als Dispersionsstabilisator, wobei die Überzugszusammensetzung alkalisch oder ammoniakalisch auf einen pH-Wert von 7 bis 10 eingestellt ist.

Die Copolymeren aus TFE, VDF und HFP und Verfahren zu ihrer Herstellung sind dem Fachmann bekannt. Die Herstellung von kolloidalen, wäßrigen Dispersionen solcher Copolymerer ist beispielsweise beschrieben in der US-PS 4 335 238. Sie folgt dem üblichen Verfahren der Copolymerisation von fluorierten Olefinen in wäßrigen, kolloidalen Dispersionen, die in Gegenwart von freie Radikale liefernden, wasserlöslichen Initiatoren wie beispielsweise Ammonium- oder Alkalipersulfaten oder Alkalipermanganaten und in Gegenwart von Emulgatoren wie insbesondere der Ammonium- oder Alkalisalze der Perfluoroctansäure vorgenommen wird.

Dabei ist die Dosierung der Monomeren entsprechend der gewünschten Zusammensetzung des Copolymeren zu bemessen. Diese Zusammensetzung beträgt 45 bis 65 Gew.-% an copolymerisierten Einheiten des TFE, 20 bis 35 Gew.-% an copolymerisierten Einheiten des VDF und 10 bis 20 Gew.-% an copolymerisierten Einheiten des HFP, wobei die einzelnen Anteile so auszuwählen sind, daß sie sich auf 100 Gew.-% ergänzen. Derartige Terpolymere mit TFE als überwiegendem Bestandteil haben ausgeprägte thermoplastische Eigenschaften. Sie besitzen einen Schmelzpunkt von 130 bis 170 °C, ermittelt nach des DSC-Methode ("Differential Scanning Calorimetry"), und einen Wert für den Schmelzindex von 50 bis 250 g/10 min, gemessen bei 265 °C bei 11 kp Belastung. Für die Anwendung der erfindungsgemäßen wäßrigen, pastösen Überzugszusammensetzungen müssen die aus der Polymerisation erhaltenen verdünnten, wäßrigen, kolloidalen Dispersionen dieser Copolymeren aufkonzentriert werden, was nach bekannten Verfahren wie beispielsweise durch schonendes Eindampfen im Vakuum (US-PS 3 316 201), durch Elektrodekantation (GB-PS 642 025) oder Ultrafiltration (US-PS 4 369 266) erfolgen kann. Bei diesen Verfahren wird der Dispersion ein nichtionischer oder anionischer Dispersionsstabilisator zugesetzt. Hierfür können bekannte Netzmittel wie alkoxylierte Alkylphenole oder Alkali- oder Ammoniumlaurylsulfate Verwendung finden; vorzugsweise sind dies die Ammoniumsalze von Alkancarbonsäuren mit 10 bis 14 C-Atomen, und insbesondere Ammoniumlaurat.

In Kombination mit diesen Copolymeren enthält die erfindungsgemäße Überzugszusammensetzung ein Verdickungsmittel, das ein im wesentlichen unvernetztes Copolymeres der Acryl- oder Methacrylsäure ist. Dabei soll der Begriff "im wesentlichen unvernetzt" geringfügige, vernachlässigbare Anteile von Vernetzungen in solchen Copolymeren miteinschließen. Dieses Copolymere soll eine Viskosität von 5 bis 40, vorzugsweise von 10 bis 30 mPa s, gemessen an einer 1 gew.-%igen wäßrig-ammoniakalischen Lösung bei einem pH-Wert von 9 und einer Schergeschwindigkeit von 1000 s⁻¹ bei 20 °C mit einem Rotationsviskosimeter, aufweisen. Die im wesentlichen unvernetzten Copolymeren der Acryl- oder Methacrylsäure sind solche, die neben copolymerisierten Einheiten aus der Gruppe der Acryl-und Methacrylsäure oder deren Gemischen noch copolymerisierte Einheiten mindestens eines Esters der Acryl- oder Methacrylsäure mit einem Alkanol von 1 bis 10, vorzugsweise 1 bis 5 C-Atomen in der Polymerkette besitzen. Insbesondere kommen Copolymere von Acrylsäure mit Ethyl- oder Butylacrylat oder Terpolymere mit beiden Ester-Comonomeren und mit entsprechender Viskositätseinstellung in Betracht.

Es ist außerordentlich überraschend, daß für die erfindungsgemäßen Überzugszusammensetzungen Verdickungsmittel geeignet sind, die für sich allein relativ niedrigviskose Einstellungen darstellen und kaum vernetzt sind, und daß damit mit den genannten Copolymeren aus TFE, VDF und HFP hochviskose streichfähige Pasten erhalten werden können. Üblicherweise wird ein guter Verdickungseffekt mit vernetzten und/oder hochviskosen Verdickungsmitteln erhalten. Zwar kann man prinzipiell höherviskose und/oder stark vernetzte Polyacrylat-Verdickungsmittel zusammen mit den genannten Copolymeren auch verwenden, jedoch läßt sich damit der angestrebte Effekt, mit mög-lichst wenig Verdickungsmittel auszukommen, nicht verwirklichen. Dagegen wird mit dem erfindungsge-mäß eingesetzten Verdickungsmittel eine streichfä-hige Paste mit einer hohen Viskosität von 500 bis 5000 mPa s, gemessen bei einer Schergeschwindigkeit von 50 s⁻¹ und einer Temperatur von 20 °C, einem Rotationsviskosimeter nach einer Zeit von 24 h, vom Zeitpunkt der Abmischung an gerechnet, erhalten.

Die Herstellung des erfindungsgemäßen pastösen Überzugsmittels erfolgt vorzugsweise so, daß zunächst zu der aufkonzentrierten wäßrigen Dispersion des Copolymeren von TFE, VDF und HFP gegebenenfalls noch Netzmittel zugegeben wird, falls die erforderliche Menge nicht bereits von der Aufkonzentrierung der Copolymer-Dispersion her anwesend ist. Sodann wird diese Dispersion mit Alkalien wie NaOH oder Ammoniak auf den erforderlichen pH-Wert von 7 bis 10, vorzugsweise 8 bis 9, eingestellt, falls die Dispersion diese Alkalität nicht bereits aufweist. Danach wird das Verdik-kungsmittel in einer Menge von 0,1 bis 1,5, vorzugsweise von 0,3 bis 1,0 Gew.-%, angegeben als Polymer-Feststoff, bezogen auf die Summe der Polymer-Feststoffe a¹) plus a²), als wäßrige Emulsion unter Rühren hinzugefügt. Die Viskosität steigt sofort bis zu einem pastösen Charakter stark an, bei weiterem Rühren verlangsamt sich der Anstieg bis zu Werten von 500 bis 5000 mPa s, gemessen bei einer Schergeschwindigkeit von 50 s⁻¹ und einer Temperatur von 20 °C, die nach einer Zeit von etwa 24 h erreicht werden.

Die erfindungsgemäßen wäßrigen, pastösen Überzugszusammensetzungen können übliche und bekannte Zusätze enthalten. Zur gleichmäßigen Verteilung werden diese Zusätze zweckmäßigerweise vor Zugabe des Verdickungsmittels der Copolymer-Dispersion einverleibt, gegebenenfalls durch Abreiben, beispielsweise in einer Perlmühle.

Solche Zusätze sind insbesondere Füllstoffe und Pigmente, darunter auch solche, die eine gewisse Lichtschutzwirkung gegen UV-Strahlung bewirken, üblicherweise in einer Menge von bis zu 15 Gew.-%. Beispielsweise seien erwähnt Ruß, Silicate wie Talkum oder Glimmer, Eisenoxide, Zinkoxid, Bariumsulfat, Chromoxid, andere Metalloxide und Metallsulfide, Glasfasern, Glaspulver, Glaskugeln, Metalle in Form von Pulvern, Flocken oder Flittern, Perlglanzpigmente, Chrom- oder Cadmiumgelb, Cadmiumrot, organische Farbstoffe wie Phthalocyanin, Naphtol- oder Toluidinfarbstoffe. Besonders bevorzugt als Pigment und Füllstoff ist Titandioxid, insbesondere dasjenige vom Rutiltyp. Weitere Zusätze sind spezielle Lichtschutzmittel, wie zum Beispiel Benzotriazolderivate, Flammschutzmittel wie Antimontrioxid oder Aluminiumhydroxid, Anti-schaummittel auf Siliconbasis oder Feuchthaltemit-tel wie Ethylenglykol oder Ethylenglykolether.

Die erfindungsgemäßen pastösen Überzugszusammensetzungen eignen sich besonders zur Beschichtung aller Arten von Flächengebilden auf der Basis von Natur- oder Synthesefasern oder -filamenten, aber auch von Mineralfasern wie beispielsweise Glas-, Keramik- oder Asbestfasern, Kohlefasern oder Metallfasern. Dabei kann es sich um Gewebe, um andere Arten von Flächengebilden wie beispielsweise Netze oder auch um nicht-gewebte Vliese, Gelege oder Gewirke handeln. Solche Flächengebilde können zum Beispiel aus Naturfasern wie Baumwolle, aus halbsynthetischen Fasern oder Fäden wie solchen aus Zellwolle, Reyon oder Kunstseide oder auch aus vollsynthetischen Fasern oder Fäden wie solchen aus Polyacrylnitril, Polyamiden und aus Polyestern, aber auch aus Fluorpolymeren wie zum Beispiel aus Polytetrafluorethylen bestehen. Besonders bevorzugt für die Beschichtung ist Polyestergewebe.

Die erfindungsgemäßen pastösen Überzugszusammensetzungen werden auf das textile Trägermaterial mittels gängiger Auftragsverfahren wie Rollen, Streichen mit einer Rakel, Tauchen mit anschließender Abstreifung oder Siebdruck aufgebracht. Bevorzugt eignen sich diese Überzugszusammensetzungen für den Auftrag durch Streichverfahren mittels Luft- oder Metallrakel. Nach dem Aufbringen wird die Beschichtung bei Temperaturen von 180 bis 210 °C, abhängig von der jeweiligen Zusammensetzung des textilen Trägers, mehrere Minuten (im allgemeinen 3 bis 15 min) getrocknet und eingebrannt. Nach dem Trocknungsprozeß kann gegebenenfalls eine zusätzliche Bearbeitung der Oberfläche durchgeführt werden, beispielsweise mit durch Druck beaufschlagten, beheizten Glättwalzen oder mit Strukturwalzen, bei Temperaturen von 160 bis 210 °C.

Abhängig vom Feststoffgehalt, der Viskosität und dem Auftragsverfahren können mit den erfindungsgemäßen pastösen Überzugszusammensetzungen pro Arbeitsgang (Strich) 50 bis 200 g/m² Auftragsmenge erhalten werden, was einer Schichtdicke von 25 bis 100 μm entspricht. Derart erhaltene Verbundsysteme können bis zu 75 Gew.-% Beschichtungsmaterial, bezogen auf das Gesamtgewicht Beschichtung plus Trägermaterial, aufweisen.

Die erhaltenen Beschichtungen zeichnen sich durch eine hervorragende Haftung zum darunterliegenden textilen Substrat, durch Riß- und Porenfreiheit, Glätte sowie im Verbund mit dem Trägermaterial durch einen weichen Griff und eine hohe Flexibilität aus. Die mit Hilfe der erfindungsgemäßen pastösen Überzugszusammensetzungen erhaltenen Verbundsysteme besitzen eine hohe Witterungsbeständigkeit und Lebensdauer, gute Antihafteigenschaften und schmutzabweisendes Verhalten sowie eine hohe Resistenz gegen Chemikalien, Lösungsmittel und ähnliches. Von besonderem Vorteil im Vergleich zu Beschichtungen aus Polytetrafluorethylen ist der deutlich verringerte Aufwand des Beschichtungsvorgangs und außerdem die Möglichkeit, hier auch wesentlich temperaturempfindlichere textile Substrate beschichten zu können. Die erfindungsgemäßen pastösen Überzugszusammensetzungen enthalten keine organischen Lösungsmittel oder Weichmacher, so daß die Möglichkeit einer Umweltbelastung durch solche Stoffe entfällt.

Aufgrund der vorgenannten Eigenschaften sind die erfindungsgemäßen Überzugszusammensetzungen und die mit ihnen hergestellten Verbundwerkstoffe für vielfältige Anwendungen geeignet, vor allem im Außenbereich und für den Bereich des sogenannten textilen Bauens. Als Beispiele für den Einsatz der erfindungsgemäßen Verbundwerkstoffe seien genannt: Traglufthallen, Dachbahnen, Spannkonstruktionen, Trennwände, Silos und dergleichen. Ferner können daraus gefertigt werden: Zeltplanen, Schwimmbecken-Auskleidungen, Abdeckplanen z. B. für Lastkraftwagen, Containerhüllen, Transport- und Förderbänder, Schutzbekleidung und dergleichen.

Die oben und in den folgenden Beispielen erwähnten Viskositätsmessungen wurden durchgeführt mit einem Rotationsviskosimeter Rheomat 108 der Firma Contraves AG, Zürich (Schweiz) unter Benutzung der Meßkörper 1 bis 3 (Durchmesser 14, 24 und 30 mm) bei einer Temperatur von 20 °C.

Die folgenden Beispiele sollen die Erfindung erläutern:

Beispiel 1

Zur Herstellung der wäßrigen, pastösen Überzugszusammensetzung wird eine Copolymer-Dispersion mit 50 Gew.-% Feststoffgehalt eingesetzt. Das Copolymere besteht aus 55 Gew.-% Tetrafluorethylen, aus 30 Gew.-% Vinylidenfluorid und aus 15 Gew.-% Hexafluorpropen und besitzt einen DSC-Schmelzpunkt von 153 °C.

Mit dieser Copolymer-Dispersion wird eine Überzugszusammensetzung folgender Rezeptur hergestellt:
46,4 Gew.-% des oben definierten Copolymeren,
0,3 Gew.-% Verdickungsmittel (= 0,6 Gew.-%, bezogen auf die Summe Copolymer plus Verdickungsmittel)
43,5 Gew.-% Wasser
2,8 Gew.-% Ammoniumlaurat (Netzmittel)
1,9 Gew.-% Titandioxid
5,0 Gew.-% Antimontrioxid
0,1 Gew.-% Silicon-Entschäumer.

Dazu wird zunächst in die Copolymer-Dispersion mittels eines Propellerrührers das Titandioxid und Antimontrioxid unter Zugabe des Entschäumers eingerührt und auf einer Perlmühle gemahlen und die Dispersion dann mittels Ammoniak auf einen pH-Wert von 9 eingestellt. Sodann wird unter weiterem ständigem Rühren das Verdickungsmittel zugegeben. Als Verdickungsmittel wird eine 15 gew.-%ige Dispersion eines unvernetzten Copolymeren aus Methacrylsäure, Acrylsäureethylester und Acrylsäure-n-butylester in wäßrig-ammoniakalischem Medium eingesetzt, die als 1 gew.-%ige wäßrigammoniakalische Lösung bei einem pH-Wert von 9 und einer Schergeschwindigkeit von 1000 s⁻¹ eine Viskosität von 15 mPa s aufweist.

Die so hergestellte wäßrige, pastöse Überzugszusammensetzung besitzt nach 24 h eine Viskosität von 1030 mPa s, gemessen bei 20 °C und einer Schergeschwindigkeit von 50 s⁻¹. Sie wird mit Hilfe einer Laborrakel auf ein Polyestergewebe nachstehender Spezifikation beidseitig je zweimal aufgetragen, und zwar die Haftschicht mit einer Luftrakel und die Deckschicht mit einer Metallrakel (Laborstreichvorrichtung Typ SV der Firma Mathis, Niederhasli bei Zürich, Schweiz). Polyestergewebe: gewaschen und thermofixiert bei 200 °C; Fadeneinstellung (Kette/Schuß) 9/9 cm⁻¹; Fadentiter 1100 dtex; Flächengewicht 210 g/m².

Die erhaltene Auftragsmenge beträgt 385 g/m² oder 64,7 %, bezogen auf das Gewicht des Verbunds. Die Beschichtung wird nach dem ersten Strich 5 min bei 200 °C, nach dem zweiten Strich 10 min bei 200 °C eingebrannt.

Beispiel 2

Mit der Copolymer-Dispersion und dem Verdickungsmittel, beschrieben in Beispiel 1 (letzteres hier als 30 gew.-%ige Dispersion eingesetzt), wird eine Überzugszusammensetzung folgender Rezeptur hergestellt:
51,8 Gew.-% des Copolymeren aus Beispiel 1,
0,3 Gew.-% des Verdickungsmittels aus Beispiel 1 (= 0,6 Gew.-%, bezogen auf Summe Copolymer plus Verdickungsmittel)
45,3 Gew.-% Wasser
2,6 Gew.-% nicht-ionisches Netzmittel (®Triton X100).

Diese Überzugszusammensetzung besitzt nach 24 h bei einer Schergeschwindigkeit von 50 s⁻¹ bei 20 °C eine Viskosität von 750 mPa s.

Damit wird ein Glasfasergewebe (ß-Glas) einseitig mit einer Laborstreichrakel dreimal beschichtet. Nach dem ersten Strich wird 3 min, nach dem zweiten Strich 10 min bei 200 °C eingebrannt. Die erhaltene Auftragsmenge beträgt 265 g/m², entsprechend einer Schichtdicke pro Strich von 45 µm. Der Verbundwerkstoff ist transparent und flexibel.

Beispiel 3

Mit der Copolymer-Dispersion, beschrieben in Beispiel 1, wird eine Überzugszusammensetzung folgender Rezeptur hergestellt:
49,8 Gew.-% des Copolymeren aus Beispiel 1,
2,5 Gew.-% nicht-ionisches Netzmittel (®Triton X 100)
47,4 Gew.-% Wasser
0,3 Gew.-% Verdickungsmittel (= 0,6 Gew.-%, bezogen auf Summe Copolymer plus Verdickungsmittel).

Das Verdickungsmittel ist eine wäßrige, freie Carboxylgruppen enthaltende Methacrylat-Dispersion (PAS 9826D der Fa. Degussa, Hanau, BR Deutschland) mit einem Feststoffgehalt von 30 Gew.-%. Die verdünnte, auf pH = 9 eingestellte, 1 gew.-%ige Dispersion hat eine Viskosität von 55 mPa s, gemessen bei 20 °C und einer Schergeschwindigkeit von 1000 s⁻¹.

Im Verlauf von 24 Stunden bildet sich eine gut streichfähige Paste, die eine Viskosität von 1400 mPa s bei einer Schergeschwindigkeit von 1000 s⁻¹ bei 20 °C aufweist.

Vergleichsbeispiel A

Es wird die gleiche Copolymer-Dispersion eingesetzt wie im Beispiel 1 und damit eine Überzugszusammensetzung gleicher Rezeptur hergestellt wie im Beispiel 1, jedoch mit dem Unterschied, daß hier ein hochvernetztes Verdickungsmittel, bestehend aus den gleichen Comonomeren (Methacrylsäure, Acrylsäureethylester und Acrylsäure-n-butylester) mit einer Viskosität von 150 mPa s, gemessen in wäßrig-ammoniakalischer Lösung bei pH = 9 und 20 °C mit einer Schergeschwindigkeit von 1000 s⁻¹, als Bestandteil zur Überzugszusammensetzung zugegeben wird. Nach 24 Stunden wird damit nur eine Viskosität der Überzugszusammensetzung von 45 mPa s, gemessen bei einer Schergeschwindigkeit von 50 s⁻¹ bei 20 °C, erreicht. Diese Abmischung ist nicht streichfähig.

Vergleichsbeispiel B

Es wird eine Überzugszusammensetzung folgender Rezeptur hergestellt:
54,9 Gew.-% Polytetrafluorethylen (Homopolymeres)
2,7 Gew.-% nicht-ionisches Netzmittel ®Triton X 100)
42,1 Gew.-% Wasser
0,3 Gew.-% Verdickungsmittel (= 0,6 Gew.-%, bezogen auf die Summe PTFE plus Verdickungsmittel).

Als Polytetrafluorethylen wird eine konzentrierte, 55 Gew.-% Feststoff enthaltende, wäßrige, kolloidale Dispersion eines Tetrafluorethylen-Homopolymerisats, hergestellt durch Emulsionspolymerisation, zugegeben. Das Verdickungsmittel ist das gleiche, wie es in Beispiel 1 definiert wird. Die so hergestellte Überzugszusammensetzung weist bei einer Schergeschwindigkeit von 50 s⁻¹ bei 20 °C lediglich eine Viskosität von 230 mPa s auf.

**Patentansprüche**

1. Wäßrige, pastöse Überzugszusammensetzung auf der Basis eines fluorhaltigen Copolymeren aus Tetrafluorethylen (TFE), Vinylidenfluorid (VDF) und Hexafluorpropen (HFP) und eines Polyacrylat-Verdickungsmittels, dadurch gekennzeichnet, daß sie besteht aus

    a) 30 bis 60 Gew.-Teilen eines Polymeren-Gemisches aus

        a¹) 99,9 bis 98,5 Gew.-%, bezogen auf die Summe a¹) plus a²), eines Copolymeren aus 45 bis 65 Gew.-% an copolymerisierten Einheiten des TFE, 35 bis 20 Gew.-% an copolymerisierten Einheiten des VDF und 20 bis 10 Gew.-% an copolymerisierten Einheiten des HFP, sowie

        a²) 0,1 bis 1,5 Gew.-%, bezogen auf die Summe a¹) plus a²), eines Verdickungsmittels aus einem im wesentlichen unvernetzten Copolymeren der Acrylsäure oder Methacrylsäure, das neben copolymerisierten Einheiten aus der Gruppe der Acryl- und Methacrylsäure oder deren Gemischen weiterhin noch copolymerisierte Einheiten mindestens eines Acryl- oder Methacrylsäureesters enthält, der 1 bis 10 C-Atome in der Alkoholkomponente des Esters aufweist, und das in einer 1 gew.-%igen wäßrig-ammoniakalischen Lösung bei einem pH-Wert von 9 unter einer Schergeschwindigkeit von 1000 s$^{-1}$ eine Viskosität von 5 bis 40 mPa s, gemessen mit einem Rotationsviskosimeter bei 20 °C, besitzt,

b) 30 bis 60 Gew.-Teilen Wasser, und
c) 1 bis 5 Gew.-Teilen eines anionischen oder nichtionischen Netzmittels als Dispersionsstabilisator,

wobei die Überzugszusammensetzung alkalisch oder ammoniakalisch auf einen pH-Wert von 7 bis 10 eingestellt ist.

2. Wäßrige, pastöse Überzugszusammensetzung gemäß Anspruch 1, dadurch gekennzeichnet, daß das Polymerengemisch der Komponente a) aus 99,7 bis 99,0 Gew.-% des Copolymeren a$^1$) und aus 0,3 bis 1,0 Gew.-% des Verdickungsmittels a$^2$) besteht.

3. Wäßrige, pastöse Überzugszusammensetzung gemäß einem oder mehreren der Ansprüche 1 bis 2, dadurch gekennzeichnet, daß das Verdickungsmittel a$^2$) gemäß Anspruch 1 unter den dort definierten Bedingungen eine Viskosität von 10 bis 30 mPa s besitzt.

4. Wäßrige, pastöse Überzugszusammensetzung gemäß einem oder mehreren der Ansprüche 1 bis 3, dadurch gekennzeichnet, daS das Netzmittel der Komponente c) ein Ammoniumsalz einer Alkancarbonsäure mit 10 bis 14 C-Atomen ist.

5. Wäßrige, pastöse Überzugszusammensetzung gemäß einem oder mehreren der Ansprüche 1 bis 4, dadurch gekennzeichnet, daß die Überzugszusammensetzung übliche Pigmente und Füllstoffe enthält.

6. Wäßrige, pastöse Überzugszusammensetzung gemäß Anspruch 5, dadurch gekennzeichnet, daß das Pigment feingemahlener Rutil ist.

7. Wäßrige, pastöse Überzugszusammensetzung gemäß einem oder mehreren der Ansprüche 1 bis 6, dadurch gekennzeichnet, daß sie Antimontrioxid als Flammschutzmittel enthält.

8. Verwendung der wäßrigen, pastösen Überzugszusammensetzungen gemäß einem oder mehreren der Ansprüche 1 bis 7 zur Beschichtung von gewebten oder nichtgewebten Flächengebilden aus Textil- oder Mineralfasern.

## Claims

1. An agueous, pasty coating composition based on a fluorine-containing copolymer formed from tetrafluoroethylene (TFE), vinylidene fluoride (VDF), and hexafluoropropene (HFP) and on a polyacrylate thickener, characterised by comprising

a) 30 to 60 parts by weight of a mixture of polymers composed of

a$^1$) 99.9 to 98.5 % by weight, relative to the sum of a$^1$) plus a$^2$), of a copolymer formed from 45 to 65 % by weight of copolymerised units of TFE, 35 to 20 % by weight of copolymerised units of VDF and 20 to 10 % by weight of copolymerised units of HFP, and

a$^2$) 0.1 to 1.5 % by weight, relative to the sum of a$^1$) plus a$^2$), of a thickener composed of an essentially non-crosslinked copolymer of acrylic acid or methacrylic acid which, in addition to copolymerised units belonging to the group of acrylic and methacrylic acid or mixtures thereof, also contains copolymerised units of at least one acrylic or methacrylic acid ester having 1 to 10 carbon atoms in the alcohol component of the ester and which, in a 1 % strength by weight solution in agueous ammonia, at a pH of 9 and at a shear rate of 1,000 s$^{-1}$, has a viscosity of 5 to 40 mPa s, measured by means of a rotational viscometer at 20 °C,

b) 30 to 60 parts by weight of water, and
c) 1 to 5 parts by weight of an anionic or nonionic wetting agent as a stabilizer for the dispersion, the pH of the coating composition being adjusted by means of alkali or ammonia to a value of 7 to 10.

2. An agueous, pasty coating composition as claimed in claim 1, wherein the mixture of polymers in component a) is composed of 99.7 to 99.0 % by weight of the copolymer a$^1$) and of 0.3 to 1.0 % by weight of the thickener a$^2$).

3. An aqueous, pasty coating composition as claimed in one or more of claims 1 and 2, wherein the thickener a$^2$) as claimed in claim 1 has a viscosity of 10 to 30 mPa s under the conditions defined therein.

4. An aqueous, pasty coating composition as claimed in one or more of claims 1 to 3, wherein the wetting agent in component c) is an ammonium salt of an alkanecarboxylic acid having 10 to 14 carbon atoms.

5. An aqueous, pasty coating composition as claimed in one or more of claims 1 to 4, wherein the coating composition contains customary pigments and fillers.

6. An aqueous, pasty coating composition as claimed in claim 5, wherein the pigment is finely ground rutile.

7. An aqueous, pasty coating composition according to one or more of claims 1 to 6, which contains antimony trioxide as a flame-retarding agent.

8. The use of the aqueous, pasty coating compositions as claimed in one or more of claims 1 to 7 for coating woven or non-woven fabrics composed of textile or mineral fibers.

**Revendications**

1. Composition de revêtement aqueuse et pâteuse à base d'un copolymère fluoré de tétrafluoréthylène (TFE), de fluorure de vinyliden (VDF) et hexafluoropropène (HFP) et d'un polyacrylate comme épaississant, composition caractérisée en ce qu'elle est formée de :
   a) 30 à 60 parties en poids d'un mélange de polymères de :
   a1) 99,9 à 98,5 %, du poids de la somme $a^1 + a^2$, d'un copolymère formé de 45 à 65 % en poids de motifs de TFE copolymèrisés, 35 à 20 % en poids de motifs copolymèrisés de VDF et 20 à 10 % en poids de motifs copolymèrisés de HFP, avec
   a2) 0,1 à 1,5 %, du poids de la somme a1 + a2, d'un épaississant qui est un copolymère essentiellement non réticulé de l'acide acrylique et/ou méthacrylique avec des motifs copolymèrisés d'un ou de plusieurs esters de l'acide acrylique ou méthacrylique dont la partie alcool a de 1 à 10 atomes de carbone, épaississant qui, en solution aqueuse ammoniacale à 1 % en poids et à pH 9, sous une vitesse de cisaillement de 1 000 $s^{-1}$, a une viscosité de 5 à 40 mPa s, mesurée au viscosimètre rotatif à la température de 20° C
   b) 30 à 60 parties en poids d'eau, et
   c) 1 à 5 parties en poids d'un agent mouillant anionique ou non ionique pour stabiliser la dispersion, composition de revêtement qui est ajustée à un pH de 7 à 10 avec un composé alcalin ou de l'ammoniac.

2. Composition selon la revendication 1, caractérisée en ce que le mélange des polymères a) est formé de 99,7 à 99,0 % en poids du copolymère $a^1$) et de 0,3 à 1,0 % de l'épaississant $a^2$).

3. Composition selon la revendication 1 ou 2, caractérisée en ce que dans les conditions de la revendication 1 l'épaississant $a^2$) a une viscosité de 10 à 30 mPa s.

4. Composition selon une ou plusieurs des revendications 1 à 3, caractérisée en ce que l'agent mouillant c) est un sel d'ammonium d'un alcanonïque en C 10 à C 14.

5. Composition selon une ou plusieurs des revendications 1 à 4, caractérisée en ce qu'elle contient des pigments et charges courants.

6. Composition selon la revendication 5, caractérisée en ce que le pigment est du rutile finement broyé.

7. Composition selon une ou plusieurs des revendications 1 à 6, caractérisée en ce qu'elle contient du trioxyde d'antimoine comme produit d'ignifugeage.

8. L'emploi des compositions de revêtement aqueuses et pâteuses selon une ou plusieurs des revendications 1 à 7 pour en recouvrir des articles plats tissés ou non tissés de fibres textiles ou de fibres minérales.